# EUROPÄISCHE PATENTSCHRIFT

(11) **EP 1 900 310 B1**
(45) Veröffentlichungstag und Bekanntmachung des Hinweises auf die Patenterteilung: **05.06.2013**
(21) Anmeldenummer: 07017608.6
(22) Anmeldetag: 07.09.2007
(51) Int. Cl.: A47C 23/04, F16F 3/02

(54) **Federelement zur elastischen Abstützung eines Sitz-oder Liegeelements**
Spring element for elastically supporting a sitting or lying furniture
Elément à ressort pour le support élastique d'un meuble d'assise ou de couchage

(30) Priorität: 15.09.2006 DE 202006014132 U; 19.12.2006 DE 202006019123 U
(43) Veröffentlichungstag der Anmeldung: 19.03.2008
(73) Patentinhaber: Diemer & Dr. Jaspert GbR, 85630 Grasbrunn (DE)
(72) Erfinder: Jaspert, Bodo F., 85630 Grasbrunn (DE); Diemer, Gregor, 85456 Wartenberg (DE)
(74) Vertreter: Manitz, Finsterwald & Partner GbR

(56) Entgegenhaltungen:
- DE-A1- 10 043 056
- DE-U1-202005 002 906
- GB-A- 332 369

## Beschreibung

Die vorliegende Erfindung betrifft ein Federelement, mit welchem sich ein Sitz- oder Liegeelement elastisch in Richtung einer Federachse abstützen lässt. Das Federelement weist eine Grundplatte, zumindest eine erste Mehrzahl an in Richtung der Federachse von der Grundplatte beabstandeten Tragplatten sowie zumindest eine erste Mehrzahl an von der Grundplatte abzweigenden Federarmen auf, welche die Tragplatten mit der Grundplatte verbinden, wobei die Tragplatten jeweils über einen um eine zu der Federachse parallele Achse gewendelten Federarm mit der Grundplatte verbunden sind.

Derartige Federelemente werden beispielsweise als Teil einer Untermatratze mit einer Vielzahl von über mindestens einen Teil der Untermatratze verteilt angeordneten, voneinander unabhängigen derartigen Stützkörpern zur Abstützung einer Obermatratze oder als Federkern einer Obermatratze eingesetzt. In Untermatratzen ersetzen sie in den entsprechenden Bereichen die herkömmlichen Federleisten und bringen den Vorteil einer quasi punktelastischen Abstützung mit sich.

Aus der EP 1 335 148 A2 ist ein Federelement bekannt, welches sich infolge seiner konstruktiven Ausgestaltung vor allem hinsichtlich seiner Resthöhe bei vollständiger Kompression als vorteilhaft erweist. Um Reibungserscheinungen zwischen dem Federelement und einer davon abgestützten Matratze zu minimieren, weisen bei dem bekannten Federelement die beiden entgegengesetzt geneigten Abschnitte der Federstreben des Federelements unterschiedliche Steigungen auf, so dass die oberen Stützflächen trotz unterschiedlicher Länge der Abschnitte nicht über der unteren Stützflächen zum Liegen kommen. Die Tragplatten senken sich also bei Belastung weitgehend senkrecht ab.

Aus der DE 20 2005 002906 U 1 ist ein Federelement gemäß dem Oberbegriff des Anspruchs 1 bekannt.

Die der Erfindung zu Grunde liegende Aufgabe besteht darin, ein Federelement anzugeben, welches weiter verbesserte Federeigenschaften aufweist.

Die der Erfindung zugrunde liegende Aufgabe wird mit einem Federelement gelöst, welches die Merkmale des Anspruchs 1 aufweist.

Insbesondere können die Federarme bogenförmig gewendelt sein, was bedeutet, dass die Federarme an keiner Stelle Diskontinuitäten im Sinne knickartiger Abwinklungen aufweisen.

Durch die Wendelform kann sichergestellt werden, dass sich die einzelnen Tragplatten bei einer vertikalen Belastung im Wesentlichen nur senkrecht bewegen, so dass es keine horizontalen Bewegungsanteile auszugleichen gilt. Darüber hinaus erweist sich die Wendelform der Federelemente auch dahingehend als vorteilhaft, dass dadurch die aufgebrachte Belastung sehr gleichmäßig abgetragen werden kann.

Gemäß einer besonderen Ausführungsform des Federelements können die Federarme derart gewendelt sein, dass sie die zugehörigen Tragplatten zumindest teilweise umgreifen. Infolge der Umgreifung der Tragplatten durch die Federarme werden etwaige horizontale Bewegungsanteile ausgeglichen, so dass sich die Tragplatten bei einer Kompression infolge einer Belastung im Wesentlichen in einer senkrechten Richtung nach unten bewegen.

Darüber hinaus lässt sich durch die gewendelte Ausbildung der Federarme der mögliche Hub der Federelemente leicht variieren, indem die Federarme die Tragplatten je nach Größe des gewünschten Hubs bei vorgegebener Steigung mehr oder weniger weit umgreifen. Auf diese Weise kann der Hub der Federelemente variiert werden, ohne dabei durch eine Veränderung der Steigung der Federarme die Steifigkeitseigenschaften des Federelements verändern zu müssen.

Je nachdem, wie weit sich die Federarme um die Tragplatten herumschrauben, fällt die Länge der Federarme länger oder kürzer aus. Auf diese Weise kann eine Einstellung der Federelemente hinsichtlich der Federhärte vorgenommen werden. So wird beispielsweise ein Federelement, dessen Federarme die Tragplatten um 360° oder mehr umgreifen, bei gleicher Federhöhe eine geringere Federhärte aufweisen, als ein Federelement, dessen Federarme die zugehörigen Tragplatten lediglich um 180°, 270° oder einen beliebigen anderen Winkel kleiner als 360° umgreifen. Es lässt sich somit durch den Umgreifungswinkel die Federsteifigkeit des Federelements variieren, ohne die Querschnittsabmessungen der Federarme oder die relative Anordnung der Trägerplatten in Bezug auf die Grundplatte ändern zu müssen.

Gemäß einer weiteren Ausführungsform des Federelements kann eine besonders kompakte Gestalt und damit ein besonders kleinbauendes Federelement dadurch erzeugt werden, dass die Federarme so angeordnet werden, dass sie tangential von der Grundplatte abzweigen.

Um nicht Gefahr zu laufen, dass ein mittels der erfindungsgemäßen Federelemente gelagertes Liegeelement einer Drehkraft unterworfen wird, welche unter Umständen durch die gewendelte Ausbildung der Federelemente hervorgerufen werden kann, können die einzelnen Federarme der ersten Mehrzahl an Federarmen paarweise entgegengesetzt zueinander gewendelt sein.

Da es wünschenswert ist, die erfindungsgemäßen Federelemente einstückig aus einem Kunststoffmaterial, beispielsweise unter Verwendung eines Spritzgussverfahrens herzustellen, sollte das erfindungsgemäße Federelement in Richtung der Federachse betrachtet keine Hinterschneidungen aufweisen, die eine einstückige Herstellung nur unter Verwendung von Schiebern zusätzlich zu den üblichen Formhälften erlauben. Durch die einstückige Herstellung lässt sich das Federelement verhältnismäßig kostengünstig herstellen. Ferner ermöglicht die Einstückigkeit des Federelements eine zügige Montage, wobei durch die einstückige Anbringung mehrerer Tragplatten an der Grundplatte gleichzeitig eine hohe Auflösung sichergestellt werden kann, ohne dass dadurch die Montagezeiten verlängert werden.

Um die Herstellung des Federelements unter Verwendung eines Spritzgussverfahrens zu erleichtern, ist das Federelement erfindungsgemäß so aufgebaut, dass die Grundplatte, die Tragplatten sowie die Federarme so angeordnet sind, dass sie sich in Federrichtung betrachtet gegenseitig nicht überdecken. Insbesondere im Falle, dass sich die Federarme um mehr als 360° um die Tragplatten herum wendeln, liegen die einzelnen Windungen der Federarme hierfür wie bei einer Spiralfeder auf sich verjüngenden Radialbahnen, und die Tragplatten sind gegenüber der Grundplatte nach außen versetzt angeordnet.

Die Tragplatten können nicht nur direkt zur Auflage einer Matratze oder dergleichen vorgesehen sein. Sie können auch spezielle Kopfplatten tragen, auf denen die Matratze oder dergleichen aufliegt. Dabei kann nach einer Ausgestaltung der Erfindung jede Tragplatte eine eigene, insbesondere lösbar befestigte, Kopfplatte aufweisen. Damit ist ein individuelles Einfedern jedes Federarms wie bei Tragplatten ohne Kopfplatte möglich. Durch die lösbare Befestigung ergibt sich eine einfache Herstellung. Außerdem können unterschiedliche Kopfplatten mit den Tragplatten je nach Wunsch oder Anwendungsfall verbunden werden.

Gemäß einer anderen Ausgestaltung der Erfindung ist mindestens ein Teil der Tragplatten über eine gemeinsame, ebenfalls insbesondere lösbar befestige Kopfplatte miteinander verbunden. Insbesondere können auch alle Tragplatten über eine gemeinsame Kopfplatte miteinander verbunden sein. Gemeinsame Kopfplatten erleichtern die Herstellung und Montage weiter. Zudem ergibt sich eine Wechselwirkung zwischen den einzelnen Federarmen hinsichtlich Ihrer Einfederung, wodurch sich ein sanfterer Übergang zwischen den einzelnen Bereichen des Federelementes ergibt.

Durch das Ausbilden der Kopfplatte mit zwei oder mehr gegeneinander beweglichen, jeweils elastisch auf dem Fuß abgestützten Teilen kann das erfindungsgemäße Federelement in sich flexibel auf Belastungen reagieren. Das heißt, eine nicht vollflächige oder nicht gleichmäßige Belastung des Federelements führt dazu, dass nur ein Teil des Federelements auf grund der Belastung einfedert oder dass ein Teil der Kopfplatte stärker einfedert als der oder die übrigen Teile. Damit kann vorteilhafterweise eine feinere Auflösung einer Matratzen- oder Untermatratzenfläche erreicht werden. Mit anderen Worten, die Punktelastizität kann erhöht werden, ohne dass mehr Federelemente oder mehr Kopfplatten vorgesehen werden müssen. Die Kosten für das Federelement erhöhen sich dabei allenfalls nur verhältnismäßig geringfügig.

Nach einer bevorzugten Ausgestaltung der Erfindung ist die Verbindung zwischen den Teilen der Kopfplatte in Richtung der Verbindungslinie derart starr ausgebildet, dass sich die Länge der Verbindung zwischen den Teilen bei Einwirken von Kräften, mit denen das Federelement im vorgesehenen Gebrauch belastet wird, nicht ändert. Damit kann vorteilhafterweise erreicht werden, dass die einzelnen Teile der Kopfplatte auch bei Einzelbelastung oder ungleichmäßiger Belastung nicht auseinander driften. Ein Verkippen einzelner Teile oder eine sonstige unkontrollierte Reaktion kann dadurch vermieden werden.

Gegenüber senkrecht zur Verbindungslinie verlaufenden Anteilen von Kräften, die im vorgesehenen Gebrauch auftreten, kann die Verbindung zwischen den Teilen der Kopfplatte nach einer Ausgestaltung der Erfindung flexibel ausgebildet sein. Damit wird die Beweglichkeit der Teile der Kopfplatte gegeneinander gewährleistet.

Nach einer besonders bevorzugten Ausgestaltung der Erfindung ist die Verbindung zwischen den Teilen gegenüber solchen Kräften elastisch ausgebildet. Dadurch kann eine zusätzliche Rückstellkraft bei einseitiger oder ungleichmäßiger Belastung des Federelements erzielt werden.

Grundsätzlich können die Teile der Kopfplatte mit einer gemeinsamen Feder gegenüber dem Fuß abgestützt sein. Nach einer besonderen Ausgestaltung der Erfindung sind die Teile dagegen jeweils über eine eigene Feder abgestützt. In bestimmten Anwendungsfällen könnte hierdurch auch eine unterschiedliche Abstützung der Teile gegenüber dem Fuß, insbesondere eine unterschiedliche Elastizität eingestellt werden. Beispielsweise kann hierdurch eine über die Fläche der Matratze oder Untermatratze gewünschte unterschiedliche Federhärte in bestimmten Bereichen eingestellt werden.

Die Kippneigung des Federelements kann dadurch reduziert werden, dass die Federachse der Federn zur Federrichtung des Federelements geneigt vorgesehen wird. Dementsprechend kann die Federachse zumindest eines Teils der Federn nach einer Ausgestaltung der Erfindung zur Federrichtung des Federelements geneigt verlaufen. Zumindest zum Teil können die Federachsen aber auch parallel zur Federrichtung verlaufen.

Die Teile der Kopfplatte können als separate Teile ausgebildet sein, die über Verbindungselemente miteinander verbunden sind. Eine kostengünstig herstellbare Variante besteht darin, dass die Teile einstückig miteinander verbunden sind. Bei Kopfplatten mit mehr als zwei Teilen können diese jeweils mit einem anderen oder mehreren anderen Teilen verbunden sein.

Nach einer Ausgestaltung der Erfindung ist das Federelement so ausgeführt, dass es eine zweite Mehrzahl an von der Grundplatte beabstandeten Tragplatten aufweist, welche sich auf der anderen Seite der Grundplatte befinden als die erste Mehrzahl an Tragplatten und welche mit der Grundplatte über eine zweite Mehrzahl an Federarmen verbunden sind. Die Federarme weisen dabei ebenfalls eine derart gewendelte Gestalt auf, dass sie in Richtung der Federachse betrachtet die zugehörigen Tragplatten zumindest teilweise umgreifen. Ein derartiges zur Grundplatte symmetrisches Federelement lässt sich insbesondere als Federkomponente bei einer Federkernmatratze verwenden.

Im Übrigen lassen sich sämtliche in Bezug auf die erste Mehrzahl an Tragplatten und die erste Mehrzahl an Federelementen gemachten Ausführungen in entsprechender Weise auf die hier in Rede stehende zweite Mehrzahl an Tragplatten und die zweite Mehrzahl an Federelementen übertragen, so dass insofern auf die voranstehenden Passagen verwiesen werden kann.

Im Folgenden wird das erfindungsgemäße Federelement unter Bezugnahme auf die beigefügten Figuren exemplarisch erläutert. An dieser Stelle sei betont, dass die in den Figuren gezeigte Ausführungsbeispiele lediglich dem besseren Verständnis der Erfindung dienen und insbesondere nicht als den Schutzbereich einschränkend aufgefasst werden würfen, wobei:
- Fig. 1: eine Draufsicht auf eine erste Ausführungsform eines einseitigen erfindungsgemäßen Federelements zeigt;
- Fig. 2: eine perspektivische Darstellung des Federelements der Fig. 1 zeigt;
- Fig. 3: eine Draufsicht auf eine zweite Ausführungsform eines auf einer Latte angeordneten einseitigen erfindungsgemäßen Federelements zeigt;
- Fig. 4: eine perspektivische Darstellung des Federelements der Fig. 3 zeigt;
- Fig. 5: eine Seitenansicht des Federelements von Fig. 3 zeigt;
- Fig. 6: eine perspektivische Darstellung eines symmetrischen Federelements zeigt;
- Fig. 7: eine perspektivische Ansicht einer weiteren Ausführungsform eines erfindungsgemäßen Federelements zeigt;
- Fig. 8: eine Draufsicht auf das Federelement von Fig. 7 mit teilweise weggebrochener Kopfplatte zeigt und
- Fig. 9: eine Seitenansicht des Federelements von Fig. 7 zeigt.

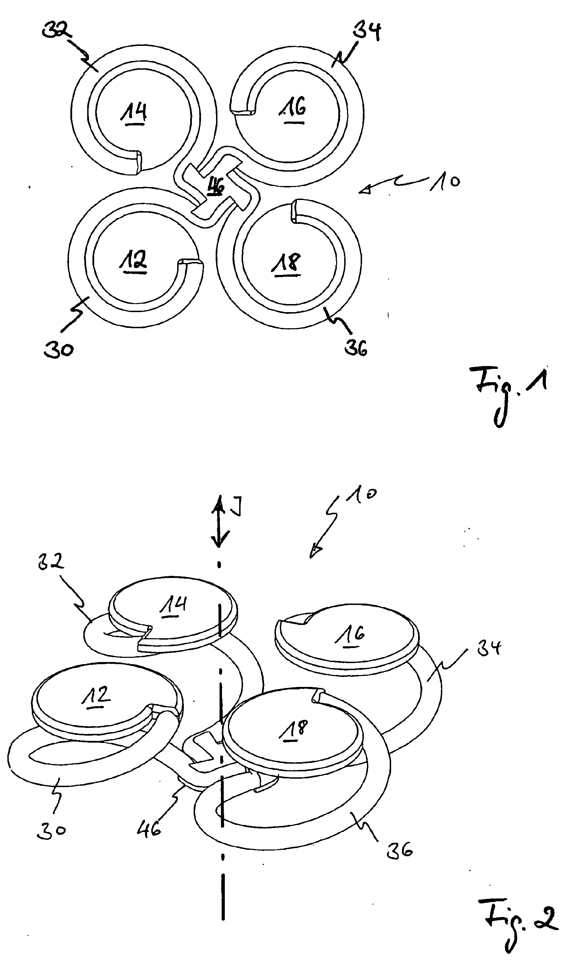

Wie der Fig. 1 entnommen werden kann, besteht das erfindungsgemäße Federelement 10 in der dargestellten Ausführungsform im Wesentlichen aus einer zentrisch angeordneten Grundplatte 46, um welche herum in der Draufsicht betrachtet vier Tragplatten 12, 14, 16, 18 in regelmäßigen Abständen angeordnet sind. In der dargestellten Ausführungform weist das Federelement 10 vier Tragplatten 12, 14, 16, 18 auf, jedoch ist es selbstverständlich auch möglich, das Federelement 10 mit nur drei oder mehr als vier Tragplatten 12, 14, 16, 18 auszustatten. Jede der Tragplatten 12, 14, 16, 18 ist mit der Grundplatte 46 über jeweils einen Federarm 30, 32, 34, 36 mit kreisrunder Querschnittsgeometrie verbunden, wobei die Federarme eine derart gewendelte Gestalt aufweisen, dass sie in Richtung der Federachse I (siehe Fig. 2) betrachtet die jeweils zugehörige Tragplatte 12, 14, 16, 18 zumindest teilweise umgreifen. Um eine zur Grundplatte nach außen versetzte Anordnung der Tragplatten 12, 14, 16, 18 zu erreichen, zweigen die Federarme 30, 32, 34, 36 im Wesentlichen tangential von der Grundplatte 46 ab. Die Federarme 30, 32, 34, 36 schließen ebenfalls tangential an den Tragplatten 12, 14, 16, 18 an, so dass die Tragplatten 12, 14, 16, 18 im Wesentlichen mittig zu der Wendelung der Federarme 30, 32, 34, 36 angeordnet sind.

Wie in Verbindung mit der Fig. 2 erkannt werden kann, sind die Tragplatten 12, 14, 16, 18 nicht nur in radialer Richtung sondern auch in axialer Richtung I von der Grundplatte 46 beabstandet, womit sich das Federelement 10 infolge der Elastizität der Federarme in axialer Richtung bei einer Druckbeaufschlagung komprimieren lässt. Durch die Steigung der Federarme 30, 32, 34, 36 lässt sich dabei die Steifigkeit des Federelements 10 einstellen.

Zwar umgreifen üblicherweise die einzelnen Federarme 30, 32, 34,36 ein und desselben Federelements 10 die einzelnen Tragplatten 12, 14, 16, 18 um jeweils denselben Winkelbetrag, wie dies beispielsweise bei den Federarmen 30, 32, 34, 36 der Fall ist, welche die zugehörigen Tragplatten 12, 14, 16, 18 um jeweils etwa 315° umgreifen. Grundsätzlich können sich jedoch auch einzelne Federarme unterschiedlich weit um die Tragplatten herum erstrecken, um auf diese Weise eine ganz gezielte Härteabstimmung der Federelemente 10 zu erreichen, so dass beispielsweise unterschiedliche Härten in benachbarten Matratzenbereichen eingestellt werden können.

Die erfindungsgemäße Ausgestaltung des Federelements 10 erweist sich nun dahingehend als vorteilhaft, dass sich bei einer Belastung des Federelements 10 in Federrichtung I die einzelnen Tragplatten 12, 14, 16, 18 ausschließlich in axialer Richtung I senken. Dies ist darauf zurückzuführen, dass die Federarme 30, 32, 34, 36 wendelartig ausgeführt und die einzelnen Tragplatten in etwa konzentrisch zu den Windungen der Federarme 30, 32, 34, 36 angeordnet sind, was zur Folge hat, dass keine oder nur geringe horizontale Bewegungskomponenten hervorgerufen werden.

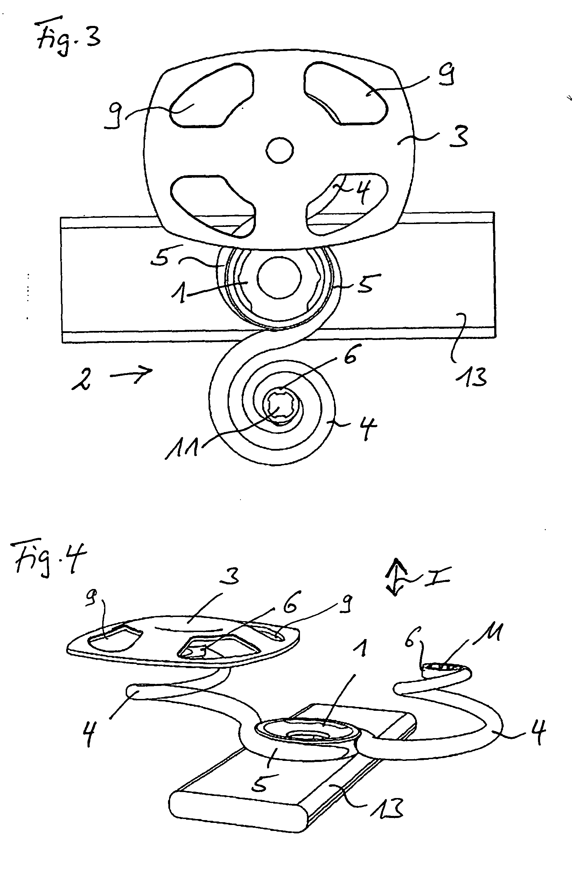

Die Fig. 3 bis 5 zeigen ein Federelement 10, bei welchem an die Grundplatte 1 nur zwei Federarme 4 tangential angeformt sind. Die Federarme 4 sind auch hier spiralförmig gewendelt, also als Kegelfeder ausgebildet, wobei sich der Kegel nach oben verjüngt. An ihrem oberen Ende münden die Federarme 4 jeweils tangential in eine Tragplatte 6, die mit einer Aufnahme 11 für eine Kopfplatte 3 versehen ist. Über einen entsprechenden, hier nicht erkennbaren Verbindungsabschnitt ist die Kopfplatte 3, insbesondere lösbar, mit der Tragplatte 6 verbindbar. Beispielsweise kann es sich bei der Verbindung um eine Art Bajonettverschluss handeln.

Die Kopfplatte 3 ist in sich starr ausgebildet und weist vier Durchbrüche 9 auf. Damit kann eine Belüftung einer von der Kopfplatte 3 getragenen Matratze gewährleistet werden. Grundsätzlich ist die Ausgestaltung der Kopfplatten 3 jedoch beliebig.

Das in den Fig. 3 bis 5 dargestellte Federelement 10 kann wie dargestellt mit seiner Grundplatte 1 auf einer Latte 13 angeordnet werden, die insbesondere in einem herkömmlichen Federholzrahmen anstelle der üblichen Federholzleisten eingesetzt sein kann. Die Kopfplatten 3 bilden dadurch Einzelstützelemente, die über die Federarme 4 gegenüber der Latte 13 federnd abgestützt sind und damit eine quasi punktuelle Auflösung des Rahmens bewirken. Durch die Verbindung der beiden Federarme 4 mit einer gemeinsamen Grundplatte 1 können zwei Stützpunkte durch ein Federelement 10 realisiert werden. Insbesondere bei einstückiger Herstellung des Federelementes 10 ist die Herstellung des Rahmens gegenüber einzelnen Federelementen mit nur einer Kopfplatte deutlich kostengünstiger.

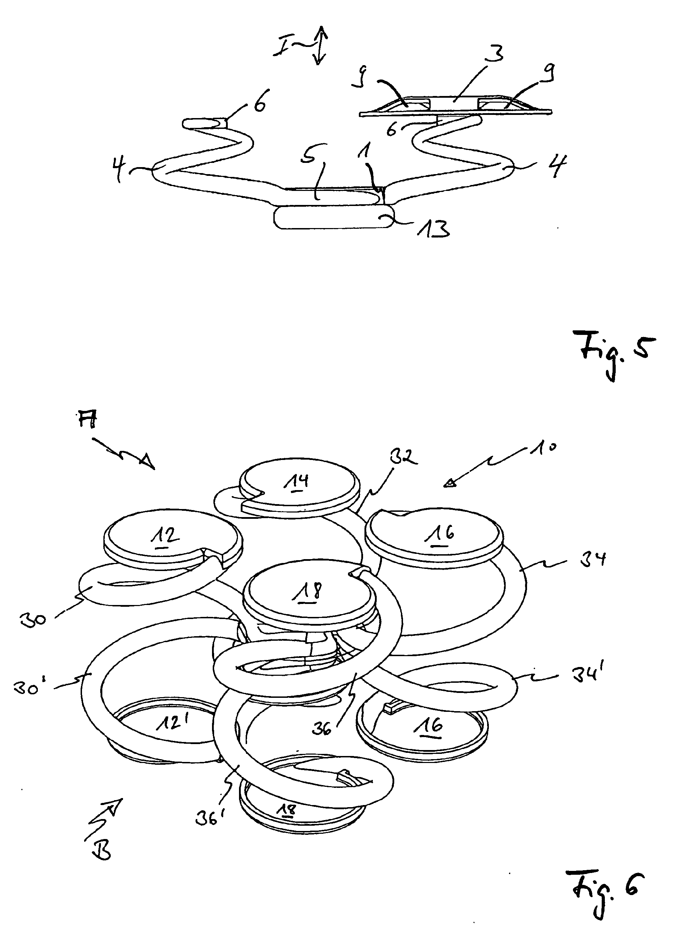

Unter Bezugnahme auf die Fig. 6 wird ein zur Grundplatte 46 symmetrisch aufgebautes Federelement 10 beschrieben. Dieses symmetrische Federelement 10 weist einen oberen Federbereich A oberhalb der Grundplatte 46 und einen unteren Federbereich B unterhalb der Grundplatte 46 auf, wobei der obere Federbereich A entsprechend der in den Fig. 1 und 2 gezeigten Ausführungsform durch vier Tragplatten 12, 14, 16, 18 gebildet wird, welche mit vier Federarmen 30, 32, 34, 36 an die Grundplatte angeschlossen sind. Bezüglich des oberen Federbereichs A kann insofern auf die Ausführungen zu den Fig. 1 und 2 verwiesen werden, da der obere Federbereich A mit dem Aufbau des dort gezeigten Federelements 10 grundsätzlich übereinstimmt.

Prinzipiell entspricht der Aufbau des unteren Federbereichs B dem Aufbau des oberen Federbereichs A. So sind auch im Federbereich B unterhalb der Grundplatte 46 um dieselbe herum vier Tragplatten 12', 14', 16', 18' in regelmäßigen Abständen angeordnet, welche sich direkt unterhalb der oberen Tragplatten 12, 14, 16, 18 befinden. Jede der unteren Tragplatten 12', 14', 16', 18' ist mit der Grundplatte 46 über jeweils einen Federarm 30', 32', 34', 36' mit kreisrunder Querschnittsgeometrie verbunden, wobei die Federarme 30', 32', 34', 36' eine derart gewendelte Gestalt aufweisen, dass sie in Richtung der Federachse I (siehe Fig. 2) betrachtet die jeweils zugehörige Tragplatte 12', 14', 16', 18' zumindest teilweise umgreifen. Allerdings wendeln sich hier die Federarme 30', 32', 34', 36' in entgegengesetzter Richtung zu den oberen Federarmen 30, 32, 34, 36 um die Tragplatten 12', 14', 16', 18' herum, wodurch Zwangsspannungen infolge behinderter Verformungen weitestgehend ausgeschlossen werden können. Um eine nach außen versetzte Anordnung der Tragplatten 12', 14', 16', 18' zu erreichen, zweigen auch hier die Federarme 30', 32', 34', 36' im Wesentlichen tangential von der Grundplatte 46 ab.

Der Aufbau des unteren Federbereichs B entspricht somit bis auf die Tatsache, dass die Federarme 30', 32', 34', 36' entgegengesetzt gewendelt sind, vollkommen dem Aufbau des oberen Federbereichs A, so dass auf weitere Ausführungen hierzu verzichtet werden kann.

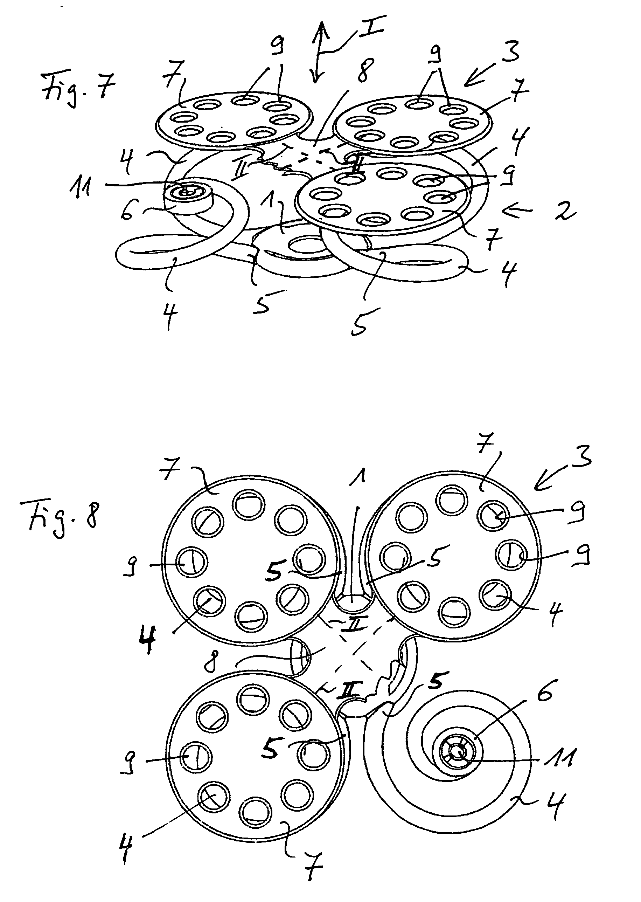

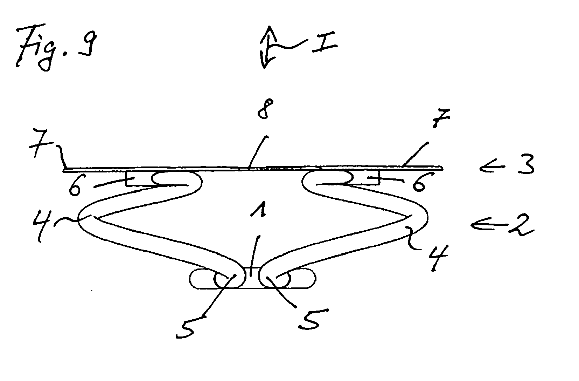

Das in den Fig. 7 bis 9 dargestellte Federelement 10 umfasst eine Grundplatte 1, einen Federkörper 2 und eine Kopfplatte 3. Die Grundplatte 1 ist dabei etwa scheibenförmig ausgebildet, während der Federkörper 2 durch vier jeweils eine Kegelfeder bildende Federarme 4 gebildet ist, die jeweils mit ihrem breiten unteren Ende 5 an die Grundplatte 1 angeformt sind, während ihr oberes Ende jeweils in eine Tragplatte 6 mündet.

Die Kopfplatte 3 besteht aus vier im Wesentlichen kreisscheibenförmigen Teilen 7, die über ein im Wesentlichen kreuzförmiges Mittelteil 8 miteinander verbunden sind. Die vier Teile 7 sind leicht nach oben gewölbt und mit mehreren Durchbrüchen 9 versehen. Auf ihrer Unterseite weisen sie jeweils ein Verbindungselement auf, welches in die Tragplatte 6 des zugehörigen Federarms 4 eingreift. Die Verbindung ist dabei bevorzugt lösbar ausgebildet, insbesondere als Schnapp-Rastverbindung.

Das kreuzförmige Verbindungsstück 8 zwischen den Teilen 7 der Kopfplatte 3 ist derart biegeelastisch ausgebildet, dass die Teile 7 des Federkörpers 3 bei Einwirken einer Kraft, wie sie üblicherweise beim Einsatz derartiger Federelemente auftritt, gegeneinander verkippt oder verdreht werden. Andererseits ist das kreuzförmige Verbindungselement 8 in Richtung der Verbindungslinien II zwischen den Teilen 7 der Kopfplatte 3 starr ausgebildet. Die Festigkeit in Richtung der Verbindungslinien II ist dabei zumindest so groß, dass die beim vorgesehenen Gebrauch des Federelements auftretenden Kräfte nicht ausreichen, eine wesentliche Verlängerung der Verbindung zwischen den Teilen 7 zu bewirken. Mit anderen Worten, das Verbindungsstück 8 ist im Hinblick auf derartige Kräfte in sich größenstabil aber elastisch verformbar.

Durch die gemeinsame Kopfplatte 3 werden bei dieser Ausgestaltung alle vier Federarme 4 miteinander verbunden. Aufgrund der beschriebenen Elastizität des Verbindungsstückes 8 können die Teile 7 der Kopfplatte 3 in einem bestimmten Umfang unabhängig voneinander einfedern, so dass sich eine harmonische Verformung bei Belastung des Federelementes 10 ergibt. Durch die Einstückigkeit der gemeinsamen Kopfplatte 3 ist die Herstellung besonders kostengünstig. Neben dem Federelement 10 ist nur ein weiteres Teil notwendig, um vier quasi punktelastische Federstellen zu verwirklichen. Ein Rahmen für ein Liegemöbel kann damit sehr kostengünstig mit hoher punktförmiger Auflösung hergestellt werden.

### Bezugszeichenliste

| | |
|---|---|
| 1 | Grundplatte |
| 2 | Federkörper |
| 3 | Kopfplatte |
| 4 | Federarm |
| 5 | unteres Ende von 4 |
| 6 | Tragplatte |
| 7 | Teil von 3 |
| 8 | Verbindungsstück |
| 9 | Durchbruch |
| 10 | Federelement |
| 11 | Aufnahme |
| 12, 14, 16, 18 | Tragplatten im Bereich A |
| 13 | Latte |
| 30, 32, 34, 36 | Federarme im Bereich A |
| 12', 14', 16', 18' | Tragplatten im Bereich B |
| 30', 32', 34', 36' | Federarme im Bereich B |
| 46 | Grundplatte |
| A | oberer Federbereich |
| B | unterer Federbereich |
| I | Federrichtung |
| II | Verbindungslinie |

## Patentansprüche

1. Federelement (10) zum elastischen Abstützen eines Sitz- oder Liegeelements in Richtung einer Federachse (I) mit einer Grundplatte (46), einer ersten Mehrzahl an in Richtung der Federachse (I) von der Grundplatte beabstandeten, voneinander getrennten und insbesondere um die Federachse verteilt angeordneten Tragplatten (12, 14, 16, 18) sowie einer ersten Mehrzahl an Federarmen (30, 32, 34, 36), welche die Tragplatten (12, 14, 16, 18) mit der Grundplatte (46) verbinden,
wobei die Tragplatten (12, 14, 16, 18) jeweils über einen um eine zu der Federachse (I) parallele Achse gewendelten Federarm (30, 32, 34, 36) mit der Grundplatte verbunden sind,
**dadurch gekennzeichnet, dass**
die Grundplatte (46), die Tragplatten (12, 14, 16, 18) sowie die Federarme (30, 32, 34, 36) so angeordnet sind, dass sie sich in Federrichtung (I) betrachtet gegenseitig nicht überdecken.

2. Federelement (10) nach Anspruch 1,
**dadurch gekennzeichnet, dass** die Federarme (30, 32, 34, 36) eine derart gewendelte Gestalt aufweisen, dass sie in Richtung der Federachse (I) betrachtet die zugehörigen Tragplatten (12, 14, 16, 18) zumindest teilweise umgreifen.

3. Federelement (10) nach zumindest einem der voranstehenden Ansprüche,
**dadurch gekennzeichnet, dass** die Federarme (30, 32, 34, 36) die zugehörigen Tragplatten (12, 14, 16, 18) zumindest annähernd um einen Winkel von 360° oder mehr umgreifen.

4. Federelement (10) nach zumindest einem der voranstehenden Ansprüche,
**dadurch gekennzeichnet, dass** die Federarme (30, 32, 34, 36) im Wesentlichen tangential von der Grundplatte (46) abzweigen.

5. Federelement (10) nach einem der vorherigen Ansprüche,
**dadurch gekennzeichnet, dass** das Federelement (10) einstückig ausgebildet ist.

6. Federelement (10) nach zumindest einem der voranstehenden Ansprüche,
**dadurch gekennzeichnet, dass** das Federelement (10) aus einem Kunststoffmaterial mittels eines Spritzgussverfahrens hergestellt ist.

7. Federelement (10) nach zumindest einem der Ansprüche 1 bis 6, **dadurch gekennzeichnet, dass** die erste Mehrzahl an Federarmen (30, 32, 34, 36) insbesondere paarweise entgegengesetzt gewendelte Federarme (30, 32, 34, 36) aufweist.

8. Federelement (10) nach zumindest einem der voranstehenden Ansprüche,
**dadurch gekennzeichnet, dass** die Federarme (30, 32, 34, 36) bogenförmig gewendelt sind.

9. Federelement (10) nach zumindest einem der voranstehenden Ansprüche,
**dadurch gekennzeichnet, dass** die Federarme (30, 32, 34, 36) in Federrichtung (I) betrachtet spiralförmig ausgebildet sind, wobei sich die Spirale insbesondere von unten nach oben verjüngt.

10. Federelement (10) nach zumindest einem der voranstehenden Ansprüche,
**dadurch gekennzeichnet, dass** die Federarme (30, 32, 34, 36) einen zumindest annähernd kreisförmigen Querschnitt aufweisen.

11. Federelement (10) nach einem der vorherigen Ansprüche,
**dadurch gekennzeichnet, dass** die Tragplatten (6) jeweils eine eigene, insbesondere lösbar befestigte, Kopfplatte (3) tragen.

12. Federelement (10) nach einem der Ansprüche 1 bis 10,
**dadurch gekennzeichnet, dass** mindestens ein Teil der Tragplatten (6) über eine gemeinsame, insbesondere lösbar befestigte, Kopfplatte (3) miteinander verbunden ist.

13. Federelement (10) nach Anspruch 11 oder 12,
**dadurch gekennzeichnet, dass** die Kopfplatte (3) mindestens zwei miteinander verbundene Teile (7) aufweist, die jeweils über den Federkörper (2) auf der Grundplatte (1) elastisch abgestützt und gegeneinander beweglich sind.

14. Federelement (10) nach Anspruch 13,
**dadurch gekennzeichnet, dass** die Verbindung zwischen den Teilen (7) der Kopfplatte (3) in Richtung der Verbindungslinie (II)
derart starr ausgebildet ist, dass sich die Länge der Verbindung zwischen den Teilen (7) bei Einwirken von Kräften, mit denen das Federelement im vorgesehenen Gebrauch belastet wird, nicht ändert.

15. Federelement (10) nach Anspruch 13 oder 14,
**dadurch gekennzeichnet, dass** die Verbindung zwischen den Teilen (7) gegenüber senkrecht zur Verbindungslinie (II) verlaufenden Anteilen von solchen Kräften flexibel, insbesondere elastisch, ist.

16. Federelement (10) nach einem der vorhergehenden Ansprüche 13 bis 15,
**dadurch gekennzeichnet, dass** die Teile (7) der Kopfplatte (3) jeweils über einen eigenen Federarm (4) abgestützt sind.

17. Federelement (10) nach einem der vorhergehenden Ansprüche 13 bis 16,
**dadurch gekennzeichnet, dass** die Teile (7) der Kopfplatte (3) einstückig miteinander verbunden sind.

18. Federelement (10) nach einem der vorhergehenden Ansprüche,
**dadurch gekennzeichnet, dass** die Federachsen mindestens eines Teils der Federarme (4) zur Federrichtung (I) des Federelements (10) geneigt verlaufen.

19. Federelement (10) nach einem der vorherigen Ansprüche,
**dadurch gekennzeichnet, dass** das Federelement (10) eine zweite Mehrzahl an von der Grundplatte (46) beabstandeten, voneinander getrennten und insbesondere um die Federachse verteilt angeordneten Tragplatten (12', 14', 16', 18') aufweist, welche sich auf der anderen Seite der Grundplatte (46) befinden als die erste Mehrzahl an Tragplatten (12, 14, 16, 18) und welche mit der Grundplatte (46) über eine zweite Mehrzahl an Federarmen (30', 32', 34', 36') verbunden sind, wobei die Federarme (30', 32', 34', 36') der zweiten Mehrzahl an Federarmen (30', 32', 34', 36') insbesondere entsprechend den Federarmen (30, 32, 34, 36) der ersten Mehrzahl an Federarmen (30, 32, 34, 36) ausgebildet sind.

## Claims

1. A spring element (10) for the elastic support of a seating or reclining element in the direction of a spring axis (I) having a base plate (46), having a first plurality of support plates (12, 14, 16, 18) spaced apart from the base plate in the direction of the spring axis (I), separate from one another and in particular arranged distributed around the spring axis, and having a first plurality of spring arms (30, 32, 34, 36) which connect the support plates (12, 14, 16, 18) to the base plate (46),
wherein the support plates (12, 14, 16, 18) are each connected to the base plate via a spring arm (30, 32, 34, 36) coiled around an axis parallel to the spring axis (I),
**characterised in that**
the base plate (46), the support plates (12, 14, 16, 18) as well as the spring arms (30, 32, 34, 36) are arranged so that they do not mutually cover one another viewed in the spring direction (I).

2. A spring element (10) in accordance with claim 1,
**characterised in that** the spring arms (30, 32, 34, 36) have a design which is coiled such that they at least partly engage around the associated support plates (12, 14, 16, 18) viewed in the direction of the spring axis (I).

3. A spring element (10) in accordance with at least one of the preceding claims,
**characterised in that** the spring arms (30, 32, 34, 36) engage around the associated support plates (12, 14, 16, 18) at least approximately by an angle of 360° or more.

4. A spring element (10) in accordance with at least one of the preceding claims,
**characterised in that** the spring arms (30, 32, 34, 36) branch off substantially tangentially from the base plate (46).

5. A spring element (10) in accordance with any one of the preceding claims,
**characterised in that** the spring element (10) is configured in one piece.

6. A spring element (10) in accordance with at least one of the preceding claims,
**characterised in that** the spring element (10) is manufactured from a plastic material by means of an injection moulding process.

7. A spring element (10) in accordance with at least one of the claims 1 to 6,
**characterised in that** the first plurality of spring arms (30, 32, 34, 36) has coiled spring arms (30, 32, 34, 36) in particular coiled oppositely pairwise.

8. A spring element (10) in accordance with at least one of the preceding claims,
**characterised in that** the spring arms (30, 32, 34, 36) are coiled in arcuate form.

9. A spring element (10) in accordance with at least one of the preceding claims,
**characterised in that** the sprig arms (30, 32, 34, 36) are configured as spiral viewed in the spring direction (I), with the spiral in particular tapering from bottom to top.

10. A spring element (10) in accordance with at least one of the preceding claims,
**characterised in that** the spring arms (30, 32, 34, 36) have an at least approximately circular cross-section.

11. A spring element (10) in accordance with any one of the preceding claims,
**characterised in that** the support plates (6) each support their own head plate (3) which is in particular releasably fastened.

12. A spring element (10) in accordance with any one of the claims 1 to 10,
**characterised in that** at least some of the support plates (6) are connected to one another via a common head plate (3) which is in particular releasably fastened.

13. A spring element (10) in accordance with claim 11 or claim 12,
**characterised in that** the head plate (3) has at least two parts (7) which are connected to one another and which are each elastically supported and mutually movable on the base plate (1) via the spring body (2).

14. A spring element (10) in accordance with claim 13,
**characterised in that** the connection between the parts (7) of the head plate (3) is configured so rigidly in the direction of the connection line (II) that the length of the connection between the parts (7) does not vary on the action of forces with which the spring element is loaded in the designated use.

15. A spring element (10) in accordance with claim 13 or claim 14,
**characterised in that** the connection between the parts (7) is flexible, in particular elastic, with respect to portions of such forces extending perpendicular to the connection line (II).

16. A spring element (10) in accordance with any one of the claims 13 to 15,
**characterised in that** the parts (7) of the head plate (3) are each supported via their own spring arm (4).

17. A spring element (10) in accordance with any one of the claims 13 to 16,
**characterised in that** the parts (7) of the head plate (3) are connected to one another in one piece.

18. A spring element (10) in accordance with any one of the preceding claims,
**characterised in that** the spring axes of at least some of the spring arms (4) extend inclined to the spring direction (I) of the spring element (10).

19. A spring element (10) in accordance with any one of the preceding claims,
**characterised in that** the spring element (10) has a second plurality of support plates (12', 14', 16', 18') which are spaced apart from the base plate (46), are separate from one another, are in particular arranged distributed around the spring axis, are located on the other side of the base plate (46) with respect to the first plurality of support plates (12, 14, 16, 18), and are connected to the base plate (46) via a second plurality of spring arms (30', 32', 34', 36'), with the spring arms (30', 32', 34', 36') of the second plurality of spring arms (30', 32', 34', 36') in particular being configured corresponding to the spring arms (30, 32, 34, 36) of the first plurality of spring arms (30, 32, 34, 36).

## Revendications

1. Élément de ressort (10) pour le soutien élastique d'un élément d'assise ou de couchage en direction d'un axe de ressort (I) comprenant une plaque de base (46), une première pluralité de plaques porteuses (12, 14, 16, 18) écartées de la plaque de base en direction de l'axe de ressort (I), séparées les unes des autres et agencées en particulier de façon répartie autour de l'axe de ressort, ainsi qu'une première pluralité de bras de ressort (30, 32, 34, 36) qui relient les plaques porteuses (12, 14, 16, 18) avec la plaque de base (46),
dans lequel les plaques porteuses (12, 14, 16, 18) sont respectivement reliées avec la plaque de base via un bras de ressort (30, 32, 34, 36) en
hélice autour d'un axe parallèle à l'axe de ressort (I),
**caractérisé en ce que**
la plaque de base (46), les plaques porteuses (12, 14, 16, 18) ainsi que les bras de ressort (30, 32, 34, 36) sont agencés de telle façon qu'ils ne se recouvrent pas mutuellement, lorsqu'on les considère en direction du ressort (I).

2. Élément de ressort (10) selon la revendication 1,
**caractérisé en ce que** les bras de ressort (30, 32, 34, 36) ont une configuration en spirale de telle façon qu'ils enserrent au moins partiellement les plaques porteuses associées (12, 14, 16, 18), lorsqu'on les considère en direction de l'axe de ressort (I).

3. Élément de ressort (10) selon l'une au moins des revendications précédentes,
**caractérisé en ce que** les bras de ressort (30, 32, 34, 36) enserrent les plaques porteuses associées (12, 14, 16, 18) au moins approximativement sur un angle de 360° ou plus.

4. Élément de ressort (10) selon l'une au moins des revendications précédentes,
**caractérisé en ce que** les bras de ressort (30, 32, 34, 36) sont ramifiés sensiblement tangentiellement depuis la plaque de base (46).

5. Élément de ressort (10) selon l'une des revendications précédentes,
**caractérisé en ce que** l'élément de ressort (10) est réalisé d'une seule pièce.

6. Élément de ressort (10) selon l'une au moins des revendications précédentes,
**caractérisé en ce que** l'élément de ressort (10) est produit en une matière plastique au moyen d'un procédé de coulée-injection.

7. Élément de ressort (10) selon l'une au moins des revendications 1 à 6,
**caractérisé en ce que** la première pluralité de bras de ressort (30, 32, 34, 36) comprend en particulier des bras de ressort spiralés (30, 32, 34, 36) opposés en particulier par paires.

8. Élément de ressort (10) selon l'une au moins des revendications précédentes,
**caractérisé en ce que** les bras de ressort (30, 32, 34, 36) sont spiralés sous une forme en arc.

9. Élément de ressort (10) selon l'une au moins des revendications précédentes,
**caractérisé en ce que** les bras de ressort (30, 32, 34, 36) sont réalisés en forme de spirale lorsqu'on les considère en direction de ressort (I), de sorte que la spirale va en particulier en se rétrécissant du haut vers le bas.

10. Élément de ressort (10) selon l'une au moins des revendications précédentes,
**caractérisé en ce que** les bras de ressort (30, 32, 34, 36) présentent une section au moins approximativement de forme circulaire.

11. Élément de ressort (10) selon l'une des revendications précédentes, **caractérisé en ce que** les plaques porteuses (7) portent chacune une propre plaque de tête (3), fixée en particulier de manière détachable.

12. Élément de ressort (10) selon l'une des revendications 1 à 10,
**caractérisé en ce qu'**au moins une partie des plaques porteuses (6) sont reliées les unes aux autres via une plaque de tête commune (3), fixée en particulier de manière détachable.

13. Élément de ressort (10) selon la revendication 11 ou 12,
**caractérisé en ce que** la plaque de tête (3) comprend au moins deux parties (7) reliées l'une avec l'autre, qui sont respectivement soutenues sur la plaque de base (1) de manière élastique via le corps de ressort (2), et qui sont mobiles l'une par rapport à l'autre

14. Élément de ressort (10) selon la revendication 13,
**caractérisé en ce que** la liaison entre les parties (7) de la plaque de tête (3) est réalisée rigide en direction de la ligne de liaison (II) de telle façon que la longueur de la liaison entre les parties (7) ne change pas sous l'action des forces par lesquelles l'élément de ressort est chargé lors de l'utilisation prévue.

15. Élément de ressort (10) selon la revendication 13 14,
**caractérisé en ce que** la liaison entre les parties (7) est flexible et en particulier élastique vis-à-vis des parts de telles forces qui sont perpendiculaires à la ligne de liaison (II).

16. Élément de ressort (10) selon l'une des revendications précédentes 13 à 15,
**caractérisé en ce que** les parties (7) de la plaque de tête (3) sont respectivement soutenues via un propre bras de ressort (4).

17. Élément de ressort (10) selon l'une des revendications précédentes 13 à 16,
**caractérisé en ce que** les parties (7) de la plaque de tête (3) sont reliées l'une à l'autre d'une seule pièce.

18. Élément de ressort (10) selon l'une des revendications précédentes,
**caractérisé en ce que** les axes des ressorts d'au moins une partie des bras de ressort (4) s'étendent de manière inclinée par rapport à la direction (I) de l'élément de ressort (10).

19. Élément de ressort (10) selon l'une des revendications précédentes,
**caractérisé en ce que** l'élément de ressort (10) comprend une seconde pluralité de plaques porteuses (12', 14', 16', 18') écartées de la plaque de base (46), séparées les unes des autres et agencées en particulier de façon répartie autour de l'axe du ressort, qui se trouvent sur l'autre côté de la plaque de base (46) que la première pluralité de plaques porteuses (12, 14, 16, 18) et qui sont reliées avec la plaque de base (46) via une seconde pluralité de bras de ressort (30', 32', 34', 36'), dans lequel les bras de ressort (30', 32', 34', 36') de la seconde pluralité de bras de ressort (30', 32', 34', 36') sont réalisés en particulier de façon correspondante aux bras de ressort (30, 32, 34, 36) de la première pluralité de bras de ressort (30, 32, 34, 36).
